# FASCICULE DE BREVET EUROPEEN

(11) **EP 0 429 386 B1**
(45) Date de publication et mention de la délivrance du brevet: **05.07.1995**
(21) Numéro de dépôt: 90470064.8
(22) Date de dépôt: 23.11.1990
(51) Int. Cl.: A47J 43/28, A47G 21/04

(54) **Spatule pour les pâtées pour les animaux domestiques**
Spatel für Tierfutter
Spatula for petfood

(30) Priorité: 23.11.1989 FR 8915593
(43) Date de publication de la demande: 29.05.1991
(73) Titulaire: Monneret, Etienne, F-25320 Montferrand le Château (FR); Santos, Belmira, F-25320 Montferrand le Château (FR)
(72) Inventeur: Monneret, Etienne, F-25320 Montferrand le Château (FR); Santos, Belmira, F-25320 Montferrand le Château (FR)
(74) Mandataire: Poupon, Michel

(56) Documents cités:
- BE-A- 893 968
- DE-U- 8 601 737
- FR-A- 1 357 070
- GB-A- 1 019 552
- GB-A- 2 052 246

## Description

La présente invention a pour objet une spatule, ou palette, pour puiser, racler et/ou couper les pâtées en boites en particulier pour animaux domestiques.

Les aliments en boites pour animaux domestiques, en particulier chiens et chats, se sont développés de manière considérable depuis quelques années.

De manière générale, les aliments sont puisés hors de la boite de conserve avec une cuiller. Ceci entraîne la nécessité de laver régulièrement cette dernière car les pâtées pour animaux durcissent rapidement sur ladite cuiller.

Il est donc important de pouvoir utiliser des spatules qui soient consommables, c'est à dire que l'on jette après usage.

Des produits de ce type ont déjà été proposés par exemple dans le brevet BE-A-893.968.

Ils présentent néanmoins un encombrement important, car l'ensemble est présenté à plat et ne peut l'être qu'ainsi.

De même, on a proposé dans le FR-A-1.357.070 des spatules unitaires planes qui peuvent s'imbriquer l'une contre l'autre sous forme de chapelets continus, les spatules devant être néanmoins enveloppées dans un conditionnement.

L'invention a pour but de remédier à ces inconvénients de l'art antérieur.

Conformément à l' invention on propose en effet un système de conditionnement de spatules ou palettes pour puiser, racler et/ou couper les pâtées en boites en particulier pour animaux domestiques, chaque spatule étant du type se présentant sous la forme d'un objet de forme oblongue à usage unique et comportant un manche qui se prolonge par une partie plus large, les formes du manche et de la partie la plus large étant complémentaires, caractérisée en ce que ladite spatule se présente sous la forme d'une bande ou d'un rouleau dans lequel les spatules sont représentées tête bêche deux à deux l'une par rapport à l'autre.

Les spatules ou palettes de l'invention pourront être réalisées en tout matériau compatible avec l'utilisation envisagée et la présentation en rouleaux, tel que par exemple en matière plastique ou avantageusement en bois mi-dur déroulé tel que peuplier ou marronnier.

On comprendra mieux l'invention à l'aide de la description faite ci-après d'un mode de mise en oeuvre donné à titre d'exemple non limitatif en référence aux dessins annexés dans lesquels :

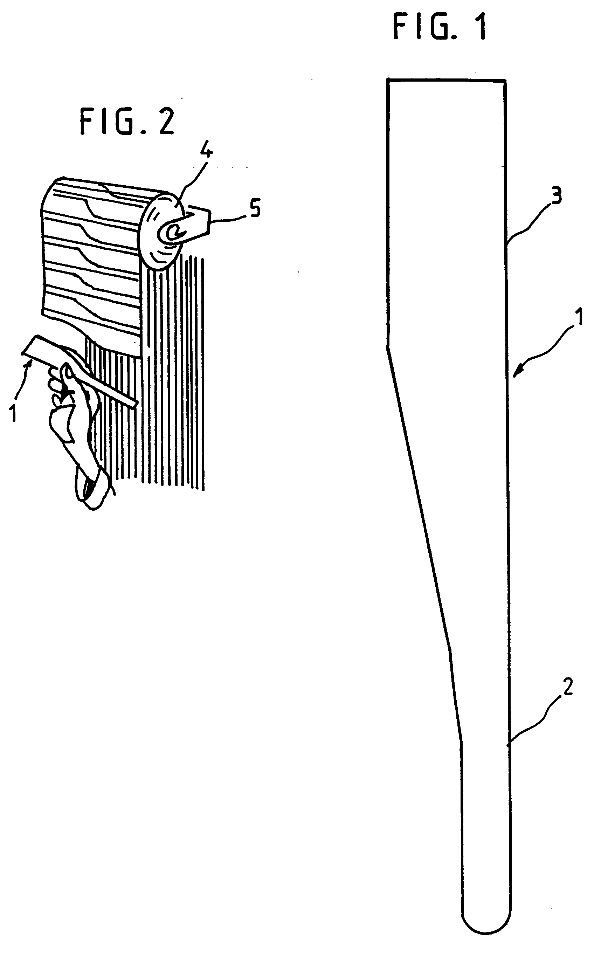

- la figure 1 est une vue en plan d'une palette unitaire,
- la figure 2 est une vue en perspective d'un rouleau de palettes unitaires.

La palette ou spatule (1) comporte essentiellement un manche (2) qui se prolonge par une partie plus large (3) qui sert de cuiller.

Elle pourra être par exemple d'une longueur d'environ 25 cm.

Les spatules unitaires (1) se présentent sous la forme d'un rouleau (4) dont elles sont détachées par l'utilisateur au fur et à mesure des besoins, de la même manière qu'un rouleau ménager de papier essuie-tout ou d'aluminium.

Le rouleau pourra être disposé sur un dévidoir mural (5).

La spatule de l'invention est à usage unique et présente donc toutes les garanties d'hygiène. Le rouleau pourra par exemple comporter 62 spatules.

La forme spécifique présentée à la figure (1) permet de présenter celles-ci tête bêche sur le rouleau, les formes des portions (3) et (2) étant complémentaires.

Les palettes de l'invention peuvent en outre servir de support publicitaire, par exemple pour les fabricants d'aliments pour animaux ou autres.

## Revendications

1. Système de conditionnement de spatules ou palettes pour puiser, racler et/ou couper les pâtées en boites en particulier pour animaux domestiques, chaque spatule étant du type se présentant sous la forme d'un objet (1) de forme oblongue à usage unique et comportant un manche (2) qui se prolonge par une partie plus large (3), les formes du manche (2) et de la partie la plus large (3) étant complémentaires, caractérisée en ce que les spatules se présentent sous la forme d'un rouleau (4) formé par une bande dans lequel les spatules sont présentées tête bêche deux à deux l'une par rapport a l'autre.

2. Système de conditionnement de spatules ou palettes selon la revendication 1, caractérisée en ce qu'elle est réalisée en bois midur déroulé tel que peuplier ou marronnier.

3. Système de conditionnement de spatules ou palettes selon l'une quelconque des revendications 1 et 2, caractérisée en ce qu'elle est réalisée en matière plastique.

## Claims

1. System of packaging spatulae or palette-knives to draw or scrape out and/or cut meat in particular petfood from cans, each spatula being of the type presenting in the form of an object of unique oblong form and comprising a handle (2) which progresses into a wider part (3), the shapes of the handle (2) and the wider part (3) being complementary, characterised in that the spatulae present in the form of a roll (4) formed by a band in which the spatulae are presented head to tail, two by two, each interlinking with the other.

2. System of packaging spatulae or palette-knives according to claim 1, characterised in that they are made of compressed semi-hard wood such as poplar or chestnut.

3. System of packaging spatulae or palette-knives according to either one of claims 1 and 2, characterised in that they are made of plastic material.

## Patentansprüche

1. System für die Unterbringung und Bereithaltung von Spateln oder Schaufeln zum Schöpfen, Ausschaben und/oder Schneiden von Dosenfutter, insbesondere für Haustiere, wobei jeder Spatel als ein länglicher Gegenstand (1) zum Einmalgebrauch ausgebildet ist und einen Griff (2) aufweist, welcher sich von einem breiteren Bereich (3) aus erstreckt, wobei die Formen des Griffes (2) und des breiteren Bereiches (3) komplementär zueinander sind, **dadurch gekennzeichnet**, daß die Spateln in Form einer Rolle (4) vorgesehen sind, welche aus einem Band gebildet ist, auf dem die Spateln paarweise und jeweils einer zum anderen entgegengesetzt liegend angeordnet sind.

2. System für die Unterbringung und Bereithaltung von Spateln oder Schaufeln nach Anspruch 1, **dadurch gekennzeichnet**, daß es aus mittelhartem Furnierschälholz wie Pappel oder Kastanie besteht.

3. System für die Unterbringung und Bereithaltung von Spateln oder Schaufeln nach einem der Ansprüche 1 und 2, **dadurch gekennzeichnet**, daß es aus Kunststoff besteht.
